(19) Europäisches Patentamt

European Patent Office

Office européen des brevets

(11) Publication number: **0 328 517 B1**

## (12) EUROPEAN PATENT SPECIFICATION

(45) Date of publication of patent specification: **17.06.92**   (51) Int. Cl.⁵: **B23D 25/10**

(21) Application number: **87900255.8**

(22) Date of filing: **29.12.86**

(86) International application number:
**PCT/IT86/00093**

(87) International publication number:
**WO 88/03070 (05.05.88 88/10)**

(54) **FLYING SHEARS.**

(30) Priority: **30.10.86 IT 2218486**

(43) Date of publication of application:
**23.08.89 Bulletin  89/34**

(45) Publication of the grant of the patent:
**17.06.92 Bulletin  92/25**

(84) Designated Contracting States:
**AT BE CH DE FR GB LI LU NL SE**

(56) References cited:
**BE-A- 511 433**
**BE-A- 660 350**
**FR-A- 1 231 882**
**GB-A- 2 078 593**
**US-A- 1 913 153**

(73) Proprietor: **SA.LI.CO S.N.C.**
**Via Giuseppe Verdi, 1**
**I-22040 Sirone(IT)**

(72) Inventor: **COLOMBO, Giordano**
**Via Dondavide Canali, 25**
**I-22060 Ulciago(IT)**

(74) Representative: **Filippi, Remo**
**Via Aldrovandi, 5**
**I-20129 Milano(IT)**

EP 0 328 517 B1

Rank Xerox (UK) Business Services

## Description

### Previous technique

Guillotine shearing machines are well-known tools see e.g. US-A 1913 153. One blade, generally the upper one, is mobile and slides on runners which keep the movement rectilinear and transversal to the cutting plane.

Blade control is made by cams or by hydraulic systems. To cut lengths of sheet metal, profiles and continuous moving bands, use is made of the so-called drum shearing machines comprising a pair of drums, one above and one below, through which the band or other piece to be cut is passed, blades being placed radially one on each drum.

Movements are so synchronised that the blades on the two drums meet, or at any rate approach each other, on the shearing plane to cut through the moving piece.

The radial position of the blades obviously determines the angle at which they lie, said angle varying progressively at the beginning and at the end of the zone of contact and at the moment when the band is cut.

The advantages of continuously cutting off lengths of a moving band are therefore to some extent lessened as, clearly, cutting precision can only be achieved by blades set absolutely perpendicular to the piece to be cut and parallel one to the other.

The subject invention as claimed in claim 1 avoids the above disadvantages at the same time offering important advantages as will be explained below.

### Description of the invention

Subject of the invention is according to the precharacterising part of claim 1 a guillotine shearing machine, especially one for cutting continuous metal bands, in which the opposing longitudinal blades translate, each parallel to itself and to the other, along equal circular trajectories with parallel axes of rotation lying on the same geometrical plane that intersects the shearing plane.

Movement of the blades is reciprocally synchronized. Centre distance between the axes of rotation of the two blades is less than the sum of distances of each blade's edge from their symmetrical axes of rotation in relation to the shearing plane.

The phases of movement of one blade in relation to the other are such that one blade meets the other close to the shearing plane becoming progressively superimposed as they proceed on the shearing plane. The start of each cutting cycle, corresponding to a 360° rotation of the blades, is controlled according to determined speeds at which the band, or other piece to be cut, and the blades move during the cycle at the most suitable instant for cutting off the desired section of band. The speed of the band to be cut and peripheral speeds of the edges of the blades when they touch the band, practically coincide. The band can therefore be cut at a practically constant reciprocal position between band and blades while both band and blades are in movement, blade cutting movement being made with translation of each blade parallel to itself.

Movement of the blades is obtained by means of a double pair of cranks for each of the two blades, said two pairs being placed at one end of the blade and at the other. The two cranks in each pair are connected by sprocket wheels with an idling sprocket wheel between them.

The axes of rotation of the two pairs of cranks are set at one end of each blade, both on the same plane transversal to the shearing plane.

The pairs of cranks at each end of the blade are connected one to another by a longitudinal shaft that ensures synchronized movement preferably by pairs of gears. The drive shaft is fixed to one crank of the lower blade connected, by a pair of sprocket wheels, to a crank on one end of the other blade.

The drive shaft is fixed to the upper crank of the lower blade, preferably connected to the lower crank of the upper blade.

Synchronizing shafts between the pairs of cranks for each blade are respectively connected, by means of gears, to the sprocket wheel fixed to the upper cranks of the lower blade and to the sprocket wheel fixed to the lower cranks of the upper blade.

Both blades are fixed at each end to two connecting rods respectively connected to the cranks forming each pair and supporting at both ends each of the above blades. The connecting rods for the upper blade support an elastic presser that acts over the entire width of the translating band, at the moment when the blades meet, accompanying their movement and at the same time stabilizing their vertical position to hold the band steady in relation to the blades making the cut.

Control of the start of each shearing cycle to cut off the desired length of band, in each cycle, and adjustment of blade rotation speed in each cycle to ensure that blade and band speeds shall be equel when the blade makes contact with the band, are operated automatically by an electronic drive unit which memorizes the information received from sensors mounted on the band and which, according to band speed and to a program typed in on a keyboard,or by some other set of controls, carries out one or more shearing cycles for cutting off one or more equal or different lengths of band as may be required.

Characteristics and purposes of the invention will be made even clearer by the following example of its execution.

Example of execution

| Fig. 1 | Front view of the invented guillotine shearing machine. |
| Fig. 2 | The same machine seen from the back |
| Fig. 3 | The same machine cut through transversally |
| Fig. 4 | Diagram of blade movements |

The shearing machine subject of this invention comprises a base 10 and uprights 11, 12 connected by a headpiece 43 at the top.

Each upright has its side pieces 13 and 14.

The upper 15 and lower 16 longitudinal blades are respectively supported by frames 17, 18, the upper one comprising bushings 19-20 and the lower one comprising bushings 23-26.

Said bushings house rotatable pins 27, 28 and 29, 30 of cranks 31, 32 and 33, 34 that determine blade cutting movement.

Cranks 35, 36, 37, 38 are placed at the other end of said blades.

At their ends, frames 17 and 18 become a kind of connecting rod of which there are four 39, 40 and 41, 42 that respectively connect the pairs of cranks 31-32, 33-34, 35-36, 37-38.

The drive shaft 50 is fixed to the crank 33 and rotates on bearings 51, 52 mounted respectively on sides 13, 14 of the upright 11.

Said shaft is fixed to crank 32 of the upper blade by sprocket wheel 53 and the opposing sprocket wheel 54.

Crank 33 is fixed in its movement to crank 34 by means of sprocket wheels 55 and 56 with the intermediate idling sprocket wheel 57.

Therefore, by means of pins 29 and 30 and bushings 23, 24, the pair of cranks 33, 34 determine movement of the lower blade in synchrony with the second pair of cranks 37, 38 connected by connecting rod 42 and by other gears similar to those already described for the first pair of cranks.

The crank 32 is connected to crank 31 by means of connecting rod 39 formed by the frame 17 and connecting rod 41 of the same frame, fixed to bushings 21 and 22.

Therefore, the cranks 35, 36 at the other end of the frame 17 for the blade 15 are also made to move by mechanisms substantially the same as those already described for the lower blade, since the shafts for the two pairs of cranks respectively on either side of the upper blade are connected one to another by sprocket wheels like those already described 55, 56, 57 and of which, for the sake of simplicity, only sprocket wheel 59, fixed to the shaft of crank 32, is shown.

By means of bearings 60, 61 placed on sides like 13, 14, the uprights 11, 12 similarly support the two horizontal shafts 70, 71 that respectively synchronize movement of the pairs of cranks 33-34 and 37-38 for the lower blade and 31-32, 35-36 for the upper blade. This synchronization is achieved by means of the gear, like 62, that engages with the sprocket wheel 53 fixed, as already explained, to shaft 50.

On upright 12 the shaft of crank 37 supports another sprocket wheel, not shown in the figures, that engages a pinion fixed to the other end of shaft 70 and carries out the same functions as those of the gear 62. Mechanisms, similar to those already described, connect the shafts of cranks 31 and 35 with the longitudinal shaft 71 for synchronizing movement of the pairs of cranks for the upper blade.

A pressure bar 80 is fixed to connecting rods 39, 41 of the upper blade.

Operation

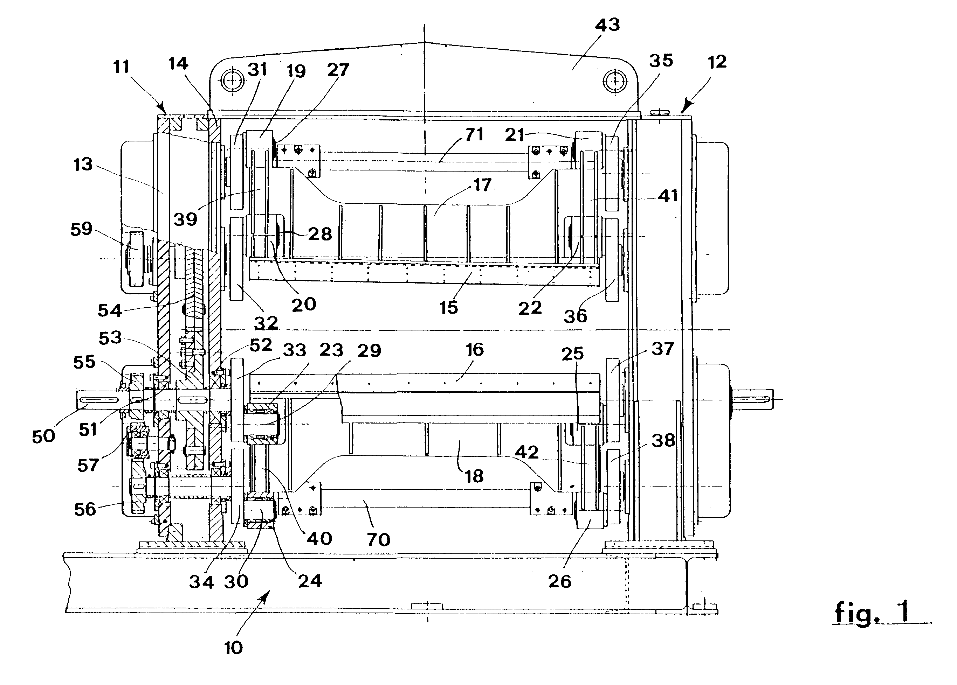

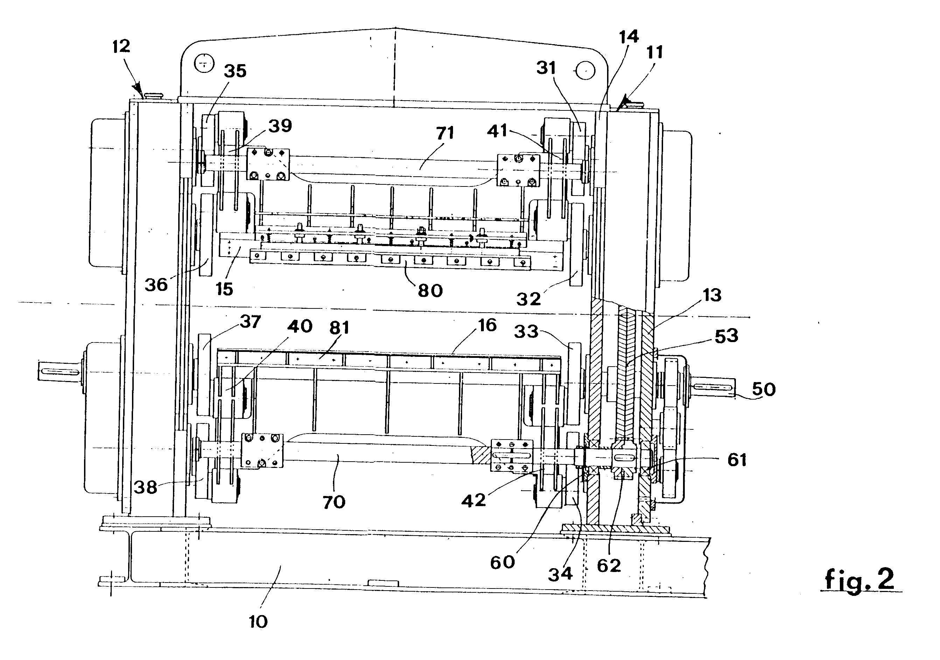

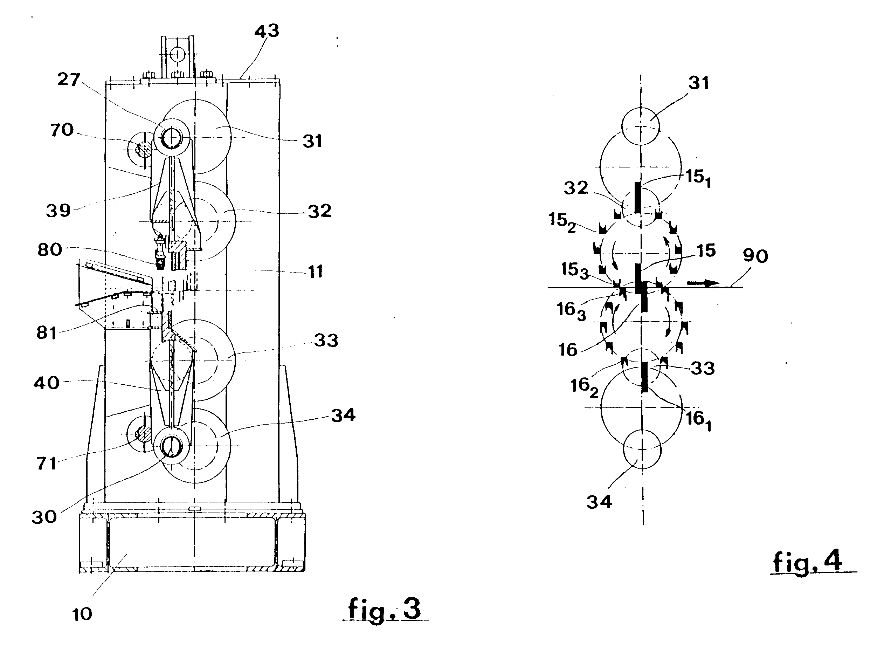

Figure 4 clearly illustrates the movements made by the upper and lower blades, 15, 16 in their variously changing positions $15_1$, $15_2$, $15_3$ and respectively $16_1$, $16_2$, $16_3$, due to movement of the cranks such as 31-32, 35-36 and 33-34, 37-38.

In each shearing cycle the blades start from and return to dead points $15_1$, $16_1$ at the top.

Blade acceleration is such that, on reaching positions $15_3$ and $16_3$ at which they meet the band 90, their speed is practically the same as that of the band and, proceeding together, their degree of superimposition increases as they approach their lower dead points 15, 16, and the cut is made.

This reciprocal action of the blades is shown by positions 15 and 16 that indicate diagrammatically how part of one blade becomes superimposed over the other. On continuing band and blade movements, the latter will take up the positions seen in Fig. 4 where they progressively depart from the shearing plane.

Control of the start of each shearing cycle for cutting of a desired length of band in each cycle, as well as adjustment of the speed of rotation of the blades in each cycle so that speeds become equal when the blades make contact with the band, is automatically done by an electronic unit that stores information received from sensors mounted on the band and, according to band speed, a program for which is typed into the unit on a keyboard or other type of instrument, causes one or more shearing cycles to be made to cut off one or more equal or different sections of band in the desired lengths.

Advantages

The advantages offered by the invention are evident. To sum them up, though the band moves continuously,clean and accurate cuts can be made, in sections of the desired length, blade movements always remaining parallel when cutting even though following circular trajectories and being therefore transversal to the piece to be cut. Compared with shearing machines at present in use, cutting is therefore done at a speed and degree of accuracy never known before.

As the above invention has been described and explained as an example only,which in no way limits it to that one, and to show its essential characteristics, it is understood that numerous alterations can be made to it according to industial, commercial or other requirements without thereby departing from the scope of the claims.

**Claims**

1. Guillotine shearing machine, especially for cutting continuous metal bands (90), with two blades (15,16) translating in mutually opposing parallel directions along a circular trajectory around rotation axes (70,71) lying on the same geometric plane, in such a way as to meet at each cutting cycle in the proximity of the cutting plane, characterized by the fact that the two blades (15) and (16) translate in synchrony, with the same angular velocity, and meet in each cutting cycle after rotating through 360°, gradually becoming increasingly superimposed to perform the cut, the speed common to both blades (15) and (16) being regulated during the cycle so as to match that of the band to be cut (90) in the zone of contact with it, said regulation being effected, automatically, by means of an electronic control unit which processes information received from sensors applied to the band (90), an elastic presser (80) being fixed to the upper blade (15)and acting on the whole width of the translating band opposite a band support (81) fixed to the lower blade (16), thus causing the band to be raised to the progressive level of the lower blade (16) near and during the cut, thus maintaining the band and the edge of said lower blade (16) at equal speed along its circular trajectory until the cut has been made, the purpose of all the above being to obtain a cut correctly perpendicular to the band and at the same time of maximum accuracy.

2. Guillotine shearing machine, especially for cutting continuous metal bands as in claim 1, characterized in that movement of the blades (15), (16) is procured by a double pair of cranks (31-32), (35-36) and (33-34), (37-38) for each of the two blades (15), (16), each of said two pairs (31-32), (35-36) and (33-34), (37-38) being placed one at either end of the blades (15), (16), the two cranks (31-32), (35-36) and (33-34), (37-38) of each pair being connected together by sprocket wheels (55), (56) with an interposed idling sprocket wheel (57), both axes of rotation of the two pairs of cranks (31-32), (35-36) and (33-34), (37-38) for each of the blades (15), (16) being set on the same plane transversal to the cutting plane.

3. Guillotine shearing machine, especially for cutting continuous metal bands as in claim 2, characterized in that the pairs of cranks (31-32), (35-36) and (33-34), (37-38) for each of the blades (15), (16) are connected together by a longitudinal shaft (70), (71) to ensure synchronized movement between them, this preferably being done by means of pairs of gears.

4. Guillotine shearing machine, especially for cutting continuous metal bands, as in claims 2 and 3, characterized in that the drive shaft (50) is fixed to one upper crank (33) of the lower blade (16) connected on the same side (14) of the machine (10) by means of a pair of sprocket wheels (53), (54), and to a lower crank (32) for the upper blade (15), the synchronizing shafts (70), (71) between the pairs (31-32), (35-36) and (33-34), (37-38) of cranks respectively for each blade (15), (16) being connected by gears (62) to sprocket wheel (53) fixed to the upper cranks (33), (37) of the lower blade (16) and to the sprocket wheel (54) fixed to the lower cranks (32), (36) of the upper blade (15).

5. Guillotine shearing machine, especially for cutting continuous metal bands as in claim 2, characterized in that each of the two ends of each blade (15), (16)is fixed to a connecting rod (39-41), (40-42), said rods (39-41), (40-42) being respectively connected to the cranks (31-32), (35-36) and (33-34), (37-38) of each pair on one side and the other of each of the above mentioned blades (15) (16).

6. Guillotine shearing machine, especially for cutting continuous metal bands as in claim 1, characterized in that the common speed of the blades (15), (16) and the start of each cutting cycle are regulated according to the speed of the band (90), so as automatically to cut pieces of band of any desired length by means of an electronic control unit which memorizes information it receives from sensors mounted on the band (90) and that, according to the speed of the band and according to the program fed into the system through a keyboard or other similar controls, causes one or more cutting cycles to be made to cut off one or more pieces of band (90) of equal or different lengths as desired.

## Revendications

1. Cisaille à guillottine, principalement pour le coupage de feuillards métalliques continus (90), avec les deux lames (15) (16) qui se déplacent chacune vers l'autre parallèlement à elle-même et à la lame opposée, le long de trajectoires circulaires autour d'axes de rotation (70), (71) situés sur un même plan géométrique de manière à se rencontrer à chaque cycle de coupage à proximité du plan de coupe, caractérisée par le fait que les deux lames (15) et (16) se déplacent en synchronie avec une vitesse angulaire égale et se rencontrent à chaque cycle de coupage après une rotation de 360° en passant au fur et à mesure à une superposition progressive pour l'exécution du coupage, la vitesse commune de ces lames (15) et (16)étant réglée durant le cycle de manière à la faire coïncider, dans la zone de contact avec le feuillard (90) à couper, avec la vitesse de ce feuillard, ce réglage étant effectué d'une manière automatique par une petite centrale électronique qui élabore les informations fournies par des senseurs appliqués au feuillard (90) à la lame supérieure (15), un presseur (80) élastique agissant sur toute la largeur du feuillard qui se déplace en opposition avec un support (81) du feuillard, solidaire de la lame (16) inférieure, provoquant de ce fait à l'approche de la coupe et durant cette opération le soulèvement du feuillard à couper à la cote progressive de la lame inférieure (16) et par suite le maintien de l'égalité entre la vitesse du feuillard et du tranchant de la lame (16) inférieure le long de sa trajectoire circulaire jusqu'à la fin du coupage, tout ceci en vue d'obtenir en même temps une coupe régulièrement orthogonale au feuillard et offrant le maximum de précision.

2. Cisaille à guillottine, principalement pour le coupage de feuillards métalliques continus, comme dans la revendication 1), caractérisée par le fait que le mouvement des lames (15) (16) est obtenu au moyen d'un double couple de manivelles (31-32), (35-36) et (33-34), (37-38) pour chacune des deux lames (15), (16), chacun de ces deux couples (31-32), (35-36),-(33-34), (37-38) étant prédisposé respectivement à l'une et à l'autre extrémité des lames (15-16), les deux manivelles (31-32), (35-36), (33-34), (37-38) étant reliées entre elles à l'aide de roues dentées (55), (56), avec interposition d'une roue (57) inutile, les axes de rotation des deux couples de manivelles (31-32), (35-36) et (33-34), (37-38) prédisposées pour chaque lame (15), (16) se trouvant sur le même plan transversal que le plan de coupe.

3. Cisaille à guillottine, principalement pour le coupage de feuillards métalliques continus, comme dans la revendication 2), caractérisée par le fait que les couples de manivelles (31-32), (35-36) et (33-34), (37-38) de chaque lame (15), (16), sont reliés entre eux à l'aide d'un arbre (70), (71) longitudinal qui assure leur mouvement synchronisé, et ceci de préférence au moyen de couples d'engrenages.

4. Cisaille à guillottine, principalement pour le coupage de feuillards métalliques continus comme dans les revendications 2) et 3), caractérisée par le fait que l'arbre (50) moteur est solidaire d'une manivelle (33) supérieure de la lame (16) inférieure reliée sur le même côté (14) de la machine (10) à l'aide d'un couple de roues (53), (54) dentées, à une manivelle (32) inférieure de la lame supérieure (15), les arbres (70), (71) de synchronisation entre les couples (31-32), (35-36) et (33-34), (37-38) de manivelles de chaque lame (15), (16) étant reliés respectivement au moyen d'engrenages (62) avec des roues dentées (53) solidaires des manivelles (33), (37) supérieures de la lame (16) inférieure et avec la roue (54) dentée solidaire des manivelles (32), (36) inférieures de la lame (15) supérieure.

5. Cisaille à guillottine, principalement pour le coupage de feuillards métalliques continus comme dans la revendication 2), caractérisée par le fait que chaque lame (15), (16) est solidaire, à chacune des deux extrémités, d'une bielle (39-41), (40-42), ces bielles (39-41), (40-42) étant respectivement reliées aux manivelles (31-32), (35-36) et (33-34), (37-38), de chaque couple qui supporte d'une partie et de l'autre chacune des lames (15), (16) sus-indiquées.

6. Cisaille à guillottine, principalement pour le coupage de feuillards métalliques continus comme dans la revendication 1), caractérisée par le fait que la commande au début de chaque cycle de coupage, de même que le réglage de la vitesse de rotation des lames (15), (16) en fonction de la vitesse du feuillard (90) pour déterminer, au moment du contact de la lame (15), (16) avec le feuillard (90), des vitesses égales, sont effectués automatiquement par une petite centrale électronique qui mémorise les informations fournies par des senseurs appliqués au feuillard (90), et qui, sur la base de sa vitesse de déroulement et selon la programmation prévue sur un clavier approprié ou sur des commandes en général, se charge d'effectuer un ou plusieurs cycles de coupage pour la séparation d'un ou de plusieurs tronçons de feuillard (90) pareils ou différents dans la longueur voulue.

**Patentansprüche**

1. Tafelschere, besonders fuer den Schnitt von endlosen Metallbaendern (90), mit zwei Messern (15), (16), die sich jeweils, das eine in Richtung auf das andere, parallel zu sich selbst und dem gegenueberliegenden, laengs kreisfoermiger Bahnen um Drehachsen (70), (71) herum verstellen, die auf der gleichen geometrischen Flaeche liegen, so dass sie sich bei jedem Schneidezyklus in der Naehe der Schnittflaeche treffen
dadurch gekennzeichnet, dass die beiden Messer (15) und (16) sich synchron mit gleicher Winkelgeschwindigkeit verstellen und sich bei jedem Schneidezyklus nach einer Drehung von 360° treffen, wobei sie allmaehlich zu einer schrittweisen Uebereinanderlagerung zwecks Durchfuehrung des Schnitts uebergehen und die gemeinsame Geschwindigkeit dieser Messer (15), (16) waehrend des Zyklus so geregelt wird, dass sie, innerhalb des Beruehrungsbereichs des zu schneidenden Bands (90), mit der Geschwindigkeit dieses Bands uebereinstimmt, wobei diese Einstellung automatisch durch ein elektronisches Steuergehauese vorgenommen wird, das die von den am Band (90) befindlichen Sensoren empfangenen Informationen verarbeitet, wobei ein elastischer Niederhalter (80) einteilig ist mit dem oberen Messer (15) und auf die ganze Breite des Bands einwirkt, sich dabei in Gegenueberstellung mit einer Halterung (81) fuer das Band verschiebend, die einteilig mit dem unteren Messer (16) ist, wodurch sich folglich in der Naehe des Schnitts und waehrend desselben die Anhebung des zu schneidenden Bands auf der progressiven Hoehe des unteren Messers (16) und mithin die Beibehaltung der Gleichheit zwischen zwischen der Geschwindigkeit des Bands und der Schneidkante dieses unteren Messers (16) laengs seiner kreisfoermigen Bahn bis zum Ende des Schnitts ergibt, und zwar um gleichzeitig einen sich zum Band einwandfrei rechtwinklig verhaltenden Hochpraezisionsschnitt zu erzielen.

2. Tafelscheer, besonders fuer den Schnitt von endlosen Metallbaendern laut Anspruch 1), dadurch gekennzeichnet, dass die Bewegung der Messer (15), (16) durch ein doppeltes Kurbelpaar (31-31), (35-36) und (33-34), (37-38) fuer jedes der beiden Messer (15-16) erzielt wird, wobei jeweils jedes dieser beiden Paare (31-32), (35-36), (33-34), (37-38) an jeweils einem und dem anderen Ende der Messer (15), (16) befestigt ist und die beiden Kurbeln (31-32), (35-36), (33-34), (37-38) jedes Paars miteinander durch Zahnraeder (55), (56) bei Zwischenschaltung eines untaetigen Zahnrads (57), verbunden sind, wobei die Umdrehungsachsen der beiden Kurbelpaare (31-32), (35-36) und (33-34), (37-38), die fuer jedes Messer (15), (16) eingerichtet wurden, beide auf der gleichen, quer zur Schnittflaeche verlaufenden Flaeche liegen.

3. Tafelschere, besonders fuer den Schnitt von endlosen Metallbaendern laut Anspruch 2), dadurch gekennzeichnet, dass die Kurbelpaare (31-32), (35-36) und (33-34), (37-38) jedes Messers (15), (16) miteinander durch eine Laengswelle (70), (71) verbunden sind, die deren synchrone Bewegung garantiert, und zwar vorzugsweise durch Raederpaare.

4. Tafelschere, besonders fuer den Schnitt von endlosen Metallbaendern Laut den Anspruechen 2) und 3), dadurch gekennzeichnet, dass die Antriebswelle (50) einteilig mit einer oberen Kurbel (33) des unteren Messers (16) ist, die am seitenteil (14) der Maschine selbst (10) mit einem Zahnraederpaar (3), (54) verbunden ist, und einteilig mit einer unteren Kurbel (32) des oberen Messers (15) ist, da die Synchronisierungswellen (70), (71) zwischen den Kurbelpaaren (31-32), (35-36) und (33-34), (37-38) jeweils jedes Messers (15), (16) ueber Raederpaare (62) mit Zahnraedern (53) verbunden sind, die einteilig mit den oberen Kurbeln (33), (37) des unteren Messers (16) sind, sowie mit dem Zahnrad (54), das einteilig mit den unteren Kurbeln (32), (36) des oberen Messers (15) ist.

5. Tafelschere, besonders fuer den Schnitt von endlosen Metallbaendern laut Anspruch 2), dadurch gekennzeichnet, dass jedes Messer (15), (16) an jedem der beiden Enden einteilig ist mit einer Pleuelstange (39-41), (40-42) und diese Pleuelstangen (39-41), (40-42) jeweils mit den Kurbeln (31-32), (33-34), (37-38) jedes Paars verbunden sind, die jeweils an der einen und der anderen Seite die o.g. Messer (15), (16) tragen.

6. Tafelschere, besonders fuer den Schnitt von endlosen Metallbaendern laut Anspruch 1), dadurch gekennzeichnet, dass die Steuerung zu Beginn jedes Schneidezyklus und ebenso die Einstellung der Umdrehungsgeschwindigkeit der Messer (15), (16), abhaengig von der Geschwindigkeit des Bands (90), damit bei Beruehrung des Messers (15), (16) mit dem Band (90) gleiche Geschwindigkeiten verursacht werden, automatisch durch ein elektronisches Steuergehaeuse vorgenommen werden, das die ueber am Band (90) befindliche Sensoren empfangenen Informationen speichert und das, abhaengig von seiner Gleitgeschwindigkeit und je nach auf einer entpsrechenden Tastatur oder dafuer vorgesehenen allgemeinen Steuerungen voreingestellter Programmierung, dafuer sorgt, dass ein oder mehrere Schneidezyklen fuer den Schnitt von einem oder mehreren gleichen oder ungleichen Abschnitten des Bands (90) in der gewuenschten Laenge vorgenommen werden.

fig. 1

fig. 2

EP 0 328 517 B1

fig.3

fig.4

EP 0 328 517 B1